# EUROPEAN PATENT APPLICATION

(11) **EP 3 376 460 A1**
(43) Date of publication of application: **19.09.2018**
(21) Application number: 18160133.7
(22) Date of filing: 06.03.2018
(51) Int. Cl.: G06Q 30/06, F25D 11/00, G06Q 10/08, G06Q 20/36

(54) **SYSTEM FOR PURCHASING GOODS**

(30) Priority: 13.03.2017 SG 10201702017V
(71) Applicant: MASTERCARD ASIA/PACIFIC PTE. LTD., Singapore (189352) (SG)
(72) Inventor: LIN, Eric Jian Hui, 650375 Singapore (SG); GILBEY, Benjamin Charles, 428567 Singapore (SG); KUOH, Veronica, 459243 Singapore (SG)
(74) Representative: Gill Jennings & Every LLP

(57) **Abstract**

Disclosed herein is an autonomous system for autonomous purchase of a purchase order. The autonomous system comprises at least one processor and a memory comprising at least one non-transitory memory device. The memory stores a digital wallet comprising at least one payment vehicle for use in purchasing the purchase order. The memory also comprises instructions that, when executed by the processor, cause the autonomous system to determine if the purchase order satisfies a set of purchase characteristics, decide to execute purchase of the purchase order upon fulfilment of a set of conditions for purchase and connect to a merchant terminal of at least one merchant through whom the purchase order can be fulfilled. The instructions further cause the processor to connect the digital wallet to a payment system through which payment for the purchase order can be made and purchasing the purchase order via the payment system using one or more payment vehicles of the at least one payment vehicle.

## Description

### TECHNICAL FIELD

The present invention relates to a system for purchasing goods, and to computer processes executed by that system. In particular, the present invention relates to systems for autonomously purchasing goods using a digital wallet.

### BACKGROUND

Increasingly, products are being couriered between locations using drones and similar devices. While drones can be remotely controlled they are typically not interactive. Drones often provide a closed ecosystem so parties other than the proprietor of the drone cannot readily access and control the drone by, for example, capturing or hijacking the drone. Thus a drone system typically involves the drone itself and some form of control system for controlling the drone and receiving, for example, video feed from the drone.

Since drones are used to acquire goods to remove the need for the consumer to be present, the consumer is not present at the time the goods are acquired. The only other party typically present at the time the goods are acquired is the merchant. The merchant is not in a position to authorise payment using the consumer's funds. Thus using a drone to acquire goods on behalf of a consumer generally requires pre-payment so the merchant is willing to release paid-for goods.

### SUMMARY

The present disclosure provides an autonomous system for autonomous purchase of a purchase order, the autonomous system comprising:
at least one processor; and
a memory comprising at least one non-transitory memory device, the memory storing a digital wallet comprising at least one payment vehicle for use in purchasing the purchase order,
wherein the memory comprises instructions that, when executed by the processor, cause the autonomous system to:
determine if the purchase order satisfies a set of purchase characteristics;
decide to execute purchase of the purchase order upon fulfilment of a set of conditions for purchase;
connect to a merchant terminal of at least one merchant through whom the purchase order can be fulfilled;
connect the digital wallet to a payment system through which payment for the purchase order can be made; and
purchasing the purchase order via the payment system using one or more payment vehicles of the at least one payment vehicle.

The present disclosure also provides a computer process for purchasing one or more goods using an autonomous device, the computer process comprising:
receiving, at the autonomous device, a purchase order comprising:
   one or more goods for purchase;
   a pickup location of a merchant from which the one or more goods can be acquired by a delivery vehicle; and
   a delivery location to which the one or more goods are to be delivered,
   wherein the autonomous device comprises a digital wallet, the digital wallet containing a payment vehicle approved for use to purchase the one or more goods;
moving the delivery vehicle to the pickup location;
receiving, by the delivery vehicle, the one or more goods from the merchant;
affecting payment for the one or more goods using the payment vehicle, wherein affecting payment comprises communicatively coupling the digital wallet with a payment system and sending to the payment system payment vehicle credentials of the payment vehicle; and
delivering, using the delivery vehicle, the one or more goods to the delivery location.

Receiving the purchase order may comprise receiving the purchase order via manual input into an interface associated with the autonomous device. Receiving the purchase order may comprise receiving the purchase order from a portable electronic device. Receiving the purchase order may comprise:
periodically generating the purchase order at a remote electronic device; and
sending the purchase order to the autonomous device.

Receiving the purchase order may comprise periodically generating the purchase order at the autonomous device.

Affecting payment may comprise receiving authorisation to affect payment using the payment vehicle. Authorisation may be received with the purchase order.

After the delivery vehicle has moved to the pickup location, the autonomous device may request authorisation to affect payment using the payment vehicle.

The computer process may further comprise determining whether an amount for purchase of the one or more goods is below a threshold transaction value and:
if so, automatically generating authorisation for affecting payment using the payment vehicle; or
if not, requesting authorisation to affect payment using the payment vehicle.

Requesting authorisation may comprise sending a push notification to an electronic device of a user and receiving, from the electronic device, authorisation to affect payment for the one or more goods using the payment vehicle.

The computer process may further comprise receiving payment confirmation upon successful completion of payment. Payment confirmation may be received by at least one of an electronic device and the autonomous device.

The digital wallet may be a companion digital wallet associated with a main digital wallet, the main digital wallet being installed on a further electronic device that is a different device to the autonomous device.

Affecting payment may comprise requesting authorisation to affect payment using the payment vehicle.

The present disclosure also provides a computer process for autonomous purchase of a purchase order, the computer process comprising:
providing an autonomous system comprising memory storing a digital wallet comprising at least one payment vehicle for use in purchasing the purchase order,
autonomously determining, at the autonomous system, if the purchase order satisfies a set of purchase characteristics;
if the purchase order satisfies the set of purchase characteristics, autonomously deciding, at the autonomous system, to execute purchase of the purchase order upon fulfilment of at least one condition for purchase;
connecting the autonomous system to a merchant terminal of at least one merchant through whom the purchase order can be fulfilled;
connecting the digital wallet to a payment system through which payment for the purchase order can be made; and
purchasing the purchase order via the payment system using one or more payment vehicles of the at least one payment vehicle.

### BRIEF DESCRIPTION OF THE DRAWINGS

Some embodiments of the invention will now be described, by way of nonlimiting example only, with reference to the accompanying drawings in which:
FIG. 1 illustrates a computer process for purchasing goods using an autonomous device;
FIG. 2 illustrates a network for affecting the computer process of FIG. 1;
FIG. 3 provides an exemplary process flow from initial setup of an autonomous device to usage of that device in the computer process of FIG 1;
FIG. 4 illustrates a network-based system for execution of the computer process of FIGs. 1, 3 and 6;
FIG. 5 is a schematic diagram of a computing system for use in execution of the computer process of FIGs. 1, 3 and 6;
FIG. 6 is an embodiment of a computer process for purchasing a purchase order; and
FIG. 7 is a system for purchasing a purchase order in accordance with the computer processes of FIG. 1, 3 and/or 6.

### DETAILED DESCRIPTION

Embodiments of the present invention will be described, by way of example only, with reference to the drawings. Like reference numerals and characters in the drawings refer to like elements or equivalents.

Some portions of the description that follows are explicitly or implicitly presented in terms of algorithms and functional or symbolic representations of operations on data within a computer memory. These algorithmic descriptions and functional or symbolic representations are the means used by those skilled in the data processing arts to convey most effectively the substance of their work to others skilled in the art. An algorithm is here, and generally, conceived to be a self-consistent sequence of steps leading to a desired result. The steps are those requiring physical manipulations of physical quantities, such as electrical, magnetic or optical signals capable of being stored, transferred, combined, compared, and otherwise manipulated.

Unless specifically stated otherwise, and as apparent from the following, it will be appreciated that throughout the present specification, discussions utilizing terms such as "scanning", "calculating", "determining", "replacing", "generating", "initializing", "outputting", or the like, refer to the action and processes of a computer system, or similar electronic device, that manipulates and transforms data represented as physical quantities within the computer system into other data similarly represented as physical quantities within the computer system or other information storage, transmission or display devices.

The present specification also discloses apparatus for performing the operations of the computer processes (e.g. "methods"). Such apparatus may be specially constructed for the required purposes, or may comprise a computer or other computing device selectively activated or reconfigured by a computer program stored therein. The algorithms and displays presented herein are not inherently related to any particular computer or other apparatus. Various machines may be used with programs in accordance with the teachings herein. Alternatively, the construction of more specialized apparatus to perform the required computer process steps may be appropriate. The structure of a computer will appear from the description below.

In addition, the present specification also implicitly discloses a computer program, in that it would be apparent to the person skilled in the art that the individual steps of the computer processes described herein may be put into effect by computer code. The computer program is not intended to be limited to any particular programming language and implementation thereof. It will be appreciated that a variety of programming languages and coding thereof may be used to implement the teachings of the disclosure contained herein. Moreover, the computer program is not intended to be limited to any particular control flow. There are many other variants of the computer program, which can use different control flows without departing from the spirit or scope of the invention.

Furthermore, one or more of the steps of the computer program may be performed in parallel rather than sequentially. Such a computer program may be stored on any computer readable medium. The computer readable medium may include storage devices such as magnetic or optical disks, memory chips, or other storage devices suitable for interfacing with a computer. The computer readable medium may also include a hard-wired medium such as exemplified in the Internet system, or wireless medium such as exemplified in the GSM mobile telephone system. The computer program when loaded and executed on a computer effectively results in an apparatus that implements the steps of the preferred computer processes.

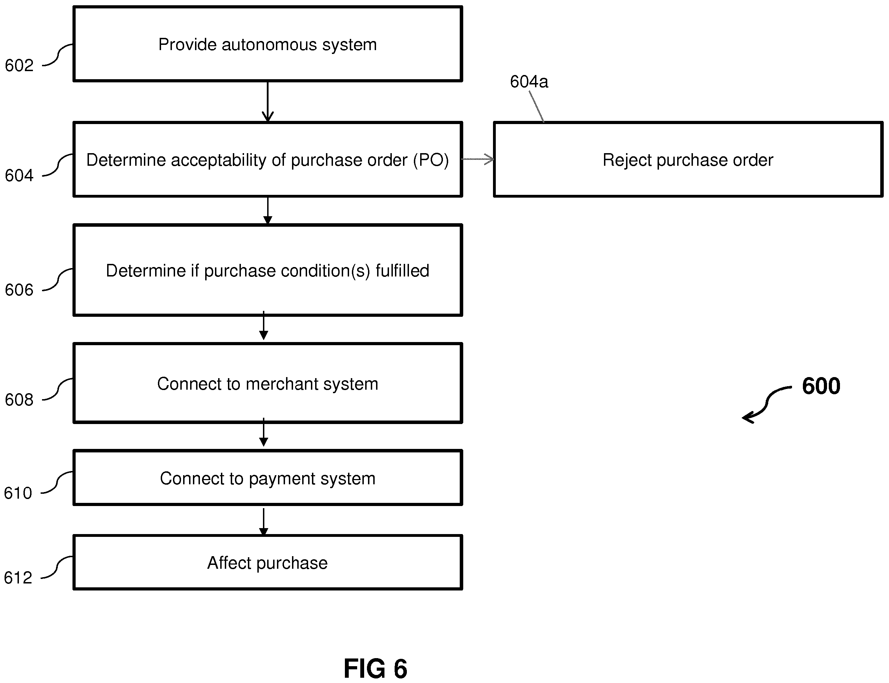

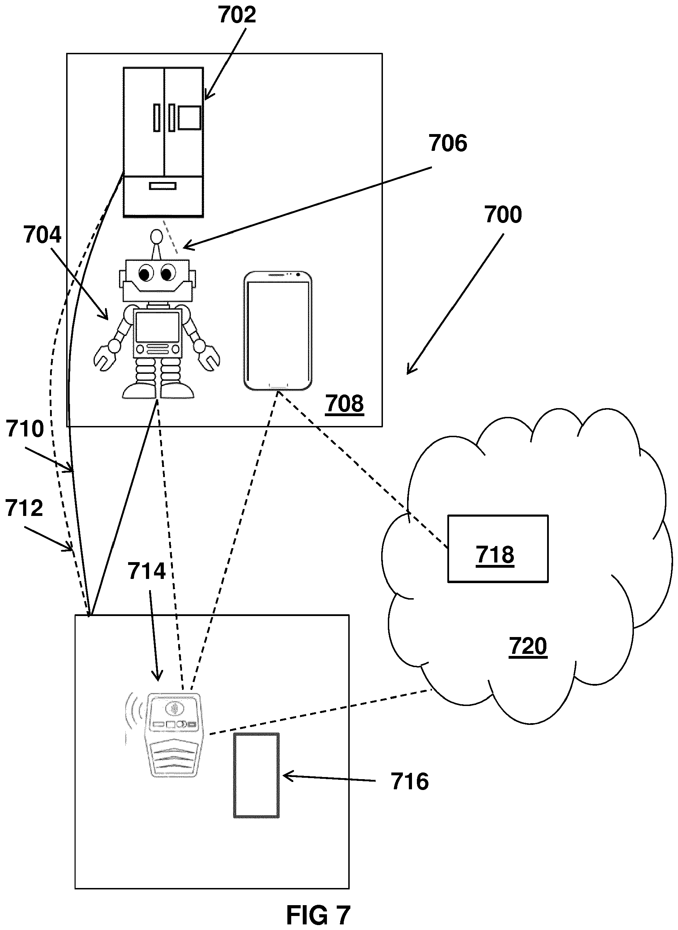

FIG. 6 shows a computer process 600 for autonomous purchase of a purchase order. The computer process is executable by an autonomous system 700 as shown in FIG. 7, and facilitates the purchase of one or more goods (together comprising the purchase order along with any shipment/conveyance fees and other charges). Of particular importance, the computer process 600 can be executed substantially without human intervention, so as to automatically make purchases based on, for example, predetermined purchase characteristics and purchase conditions. The computer process 600 broadly comprises:
Step 602: providing an autonomous system;
Step 604: autonomous determination of purchase order acceptability;
Step 606: autonomous determination of whether relevant condition(s) for purchase are fulfilled;
Step 608: connecting to a merchant terminal;
Step 610: connecting to a payment system; and
Step 612: affecting purchase.

Per step 602, an autonomous system is provided. The autonomous system is responsible for autonomously determining a purchase order should be made. The autonomous system may also autonomously place or purchase the purchase order without requiring third-party approval at the time of placement or purchase. In some embodiments, for example where a purchase order exceeds an allowable value - the purchase order value being the cost of placing or purchasing the purchase order - a third party (e.g. an individual) may be called upon to approve placement or purchase of the purchase order.

In order to autonomously affect purchase, the autonomous system is provided with means for payment. It is envisaged that in some purchase transactions, payment after receipt may be accepted. However, the present system is capable of autonomous payment prior to receipt of goods or at the time of receipt of goods. To enable this function, the autonomous system comprising memory storing a digital wallet comprising at least one payment vehicle for use in purchasing the purchase order.

In step 604: the autonomous system determines if the purchase order satisfies a set of purchase characteristics. The purchase characteristics can be predetermined or specified to ensure that autonomous purchases conform to the requirements of an end user. In some cases, the set of purchase characteristics may be a null set - all purchase transactions will thus satisfy the set of purchase characteristics. It may also be that the autonomous system is used for purchase of food and beverage in a domestic environment. Some merchants - e.g. supermarkets, convenience stores, department stores and the like - will offer goods from a large number of different goods categories such as food, beverage, entertainment (e.g. music products), sporting goods and the like. It may therefore be that the autonomous system, when used for food and beverage purchases, should be permitted to autonomously approve purchase of only those goods that fall within particular permitted goods categories.

To that end, step 604 may involve determining if the purchase order satisfies one or more of the following characteristics:
a purchase order value of the purchase order is equal to or less than a maximum purchase order value - the maximum purchase order value is the maximum value of - i.e. cost to fulfil - a purchase order. The value may be constant across all goods categories and merchants or may be set to be different according to the purchase being raised in respect of, for example, particular goods categories or merchants;
the purchase order is one of a pre-approved type of purchase order. This enables particular purchase orders to be pre-specified. For example, routine or staple food and beverage products may be purchased generally cyclically - such as milk being purchased every 3 days. The autonomous system may therefore cyclically generate or raise the purchase order after a predefine period of time (e.g. 3 days) from the previous purchase of a similar purchase order, or raise the purchase order and, at step 606, determine if it is time to place or purchase the purchase order;
one or more goods contained in the purchase order are from at least one permitted goods category - goods can be split arbitrarily into various categories, or may fall into known categories such as food, beverage, sporting goods and stationery. Consequently, the autonomous system can be used to make only select purchases of particular types of goods. This prevents purchase of goods that are not needed (e.g. milk containing lactose being ordered for a lactose intolerant person) or were not intended to be ordered without approval; and
the purchase order comprising one or more goods supplied by one or more merchants that themselves satisfy a particular set of purchase characteristics. For example, each merchant may be:
   a permitted merchant. The autonomous system may be restricted to only making purchases - i.e. placing purchase orders - with one or more merchants. These one or more merchants are "permitted". The autonomous system may be precluded from making purchases with merchants unless they are permitted. Alternatively, the permitted merchants may correspond to particular goods or goods categories. For example, for food and beverage purchases, a particular merchant or merchants may be permitted and no other merchants. However, the merchant or merchants permitted for food and beverage purchases may not be similarly permitted for purchases of goods from other goods categories. Instead, other merchants may be permitted merchants for the other goods categories;
   from a permitted merchant category. Merchants may be categorised however desired. The system may be limited to only supplying goods from merchants who specialise in a particular category - e.g. medical products where the autonomous system is ordering hospital supplies; and/or
   from a permitted industry vertical - e.g. food and beverage, hardware supplies and office supplies.

If the set of purchase characteristics is not satisfied, the computer process 600 may include rejecting the purchase order (step 604a). Alternatively, step 604 may involve selecting identifying goods that result in the purchase order not satisfying the set of purchase characteristics, and restricting the purchase order by removing those goods - in other words, forming a "restricted purchase order". For example, the autonomous system may identify goods that are from permitted goods categories and restrict the purchase order to only those goods. Thus the steps and processes described hereafter, though discussed with reference to a purchase order, will be similarly taken to be applicable to a "restricted purchase order" being a purchase order having goods removed that would otherwise cause the purchase order not to satisfy the one or more purchase characteristics.

If the purchase order satisfies the set of purchase characteristics the autonomous system autonomously decides to execute purchase of the purchase order upon fulfilment of a set of conditions for purchase - step 606. The set of conditions for purchase may be a null set. In this case, each purchase order that satisfies the set of characteristics processed at step 604 will be executed or purchased. Where the set of conditions is not a null set, each condition may comprise one of:
a threshold inventory level being reached - for example, a threshold 2L of milk may be in a smart refrigerator which may then order 4L more milk so that users of the smart refrigerator do not run out of milk but instead have sufficient milk to last until the next 4L batch arrives;
a predetermined period of time having elapsed since purchase of a previous purchase order. The autonomous system is thus limited to making a fixed number of transactions during the predetermined period of time - e.g. one day;
a sum of a purchase order value of the purchase order and a purchase order value of any other purchase orders purchased during a predetermined time window being equal to or less than a maximum purchase order value for the predetermined time window. Even where a maximum purchase order value is specified, the autonomous system may place any number of purchase orders and thus a person whose funds are paying for those purchase orders may not be able to fulfil them. This condition therefore limits the total of all purchase orders raised over a particular period of time. Similarly, a payment vehicle (e.g. a credit card, debit card or bank account) may have a maximum daily withdrawal limit. The total value of all purchase order made during any one day (i.e. the predetermined time window) must therefore be at most the daily withdrawal limit for the payment vehicle. Since funds for use in settling the purchase order are associated with the payment vehicle, the maximum purchase order value may be remaining available funds associated with that payment vehicle - for example, the maximum purchase order value may be the remaining credit card balance on a credit card used to purchase the purchase order; and
a predetermined period of time being specified with reference to at least one good of the one or more goods and the predetermined period of time specified with reference to the at least one good having elapsed since previous purchase of a good that is comparable to the at least one good. For periodic purchases such as milk and bread (periodically ordered goods), the autonomous system may automatically generate a new purchase order containing the periodically ordered good or goods, or may add the good or goods to an existing purchase order (e.g. a purchase order that has not yet been placed or purchased). Similarly, if the predetermined period of time specified with reference to at least one good has not yet elapsed, that good or those goods may be removed from the purchase order.

The autonomous device may store a list of executed purchase orders and analyse that list to identify or propose further characteristics and conditions - e.g. to a user who may approve or decline those characteristics or conditions and thereby refine the sets of characteristics and conditions. For example, repeated purchases of the same product over relatively consistent intervals may result in the autonomous device proposing that product be added to a periodic purchase cycle based on the average time between each purchase of that product.

Thus steps 604 and 606 result in the autonomous device being able to decide to raise purchase orders for one or more goods. This automates some aspects of the decision making process, yet allows users to specify or codify requirements they would otherwise have taken into account if making the decisions themselves - through compilation of a set of purchase characteristics and purchase conditions.

In order to place the purchase order, the autonomous system connects to a merchant terminal of at least one merchant through whom the purchase order can be fulfilled - step 608. In some cases a single merchant may be able to fulfil the purchase order. In other cases, more than one merchant may be required to fulfil the purchase order. In the latter case, the autonomous system may fulfil the purchase order by connecting to a merchant aggregator and placing the purchase order through the merchant aggregator (e.g. amazon.com®). The merchant aggregator then acts to indirectly, concurrently connect the autonomous system to multiple merchant terminals.

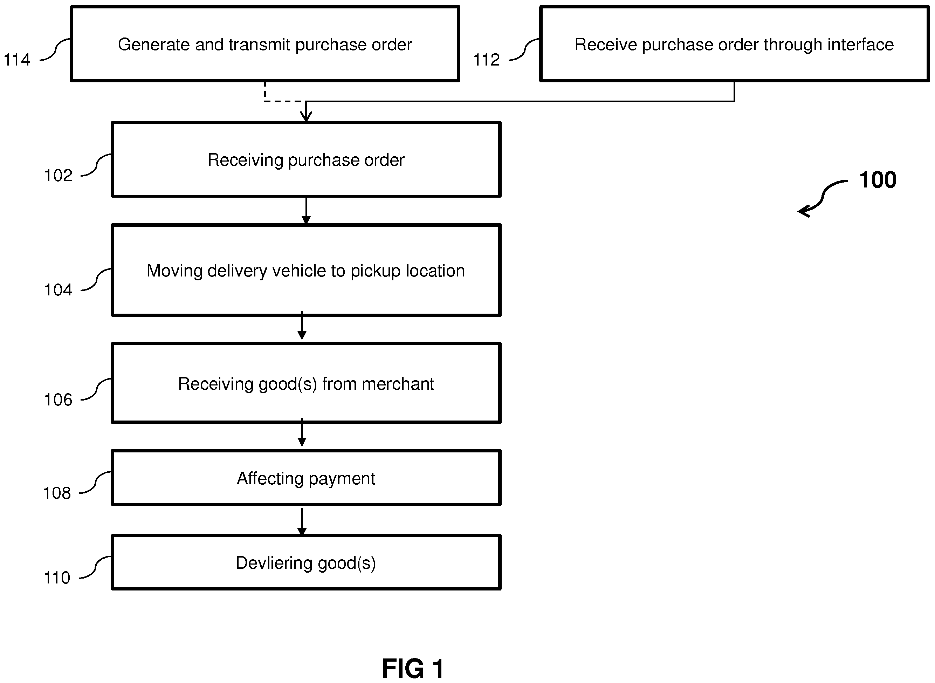

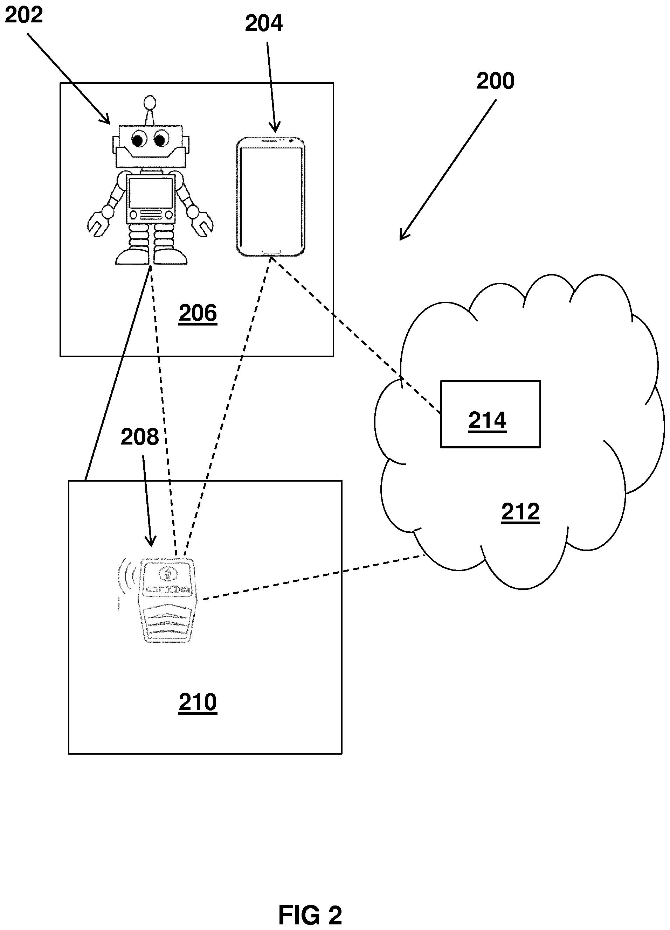

Types of merchant terminal are discussed with reference to FIG. 2 and types of payment system are discussed with reference to FIGs. 1 and 2. Moreover, combinations of features from the various embodiments described herein - e.g. those shown in FIGs. 1 and 6 - are intended to be combined and features of the various embodiments may similarly be omitted from any such combination, without falling outside the present disclosure.

Step 608 involves connecting the digital wallet to a payment system through which payment for the purchase order can be made. Where the autonomous system comprises an autonomous stationary device, such as a smart refrigerator or smart light fitting (in the present context this may be an Internet of Things (IOT) enabled light fitting that can order a replacement bulb upon failure of the bulb currently installed in the light fitting), the autonomous device may connect to the merchant terminal (e.g. merchant website or landing page) via a network such as the Internet through which the order can be placed, and also connect to a payment gateway or other payment system accessible through the merchant terminal so as to affect payment for the purchase order. Making purchases by coupling digital wallets with payment gateways (or POS terminals and the like, for embodiments where a delivery vehicle comprising a companion digital wallet is sent to pick up the one or more goods making up the purchase order) is generally understood process and is discussed further with reference to FIGs. 1 and 2. In the present case, the autonomous system or device performs that process autonomously.

In addition, the merchant terminal and payment system may comprise the same system or device, or may comprise separate systems or devices. The merchant terminal and payment system may together be called a "merchant system", being a system comprising one or more devices through which the purchase order can be placed according to step 608, and payment can be made according to steps 610 and 612.

Step 610 involves purchasing the purchase order via the payment system using one or more payment vehicles of the at least one payment vehicle. Transaction settlement is an understood process executed after coupling a digital wallet with a payment system - for example, after selecting use of a digital wallet through a payment gateway accessible via a merchant's website or app.

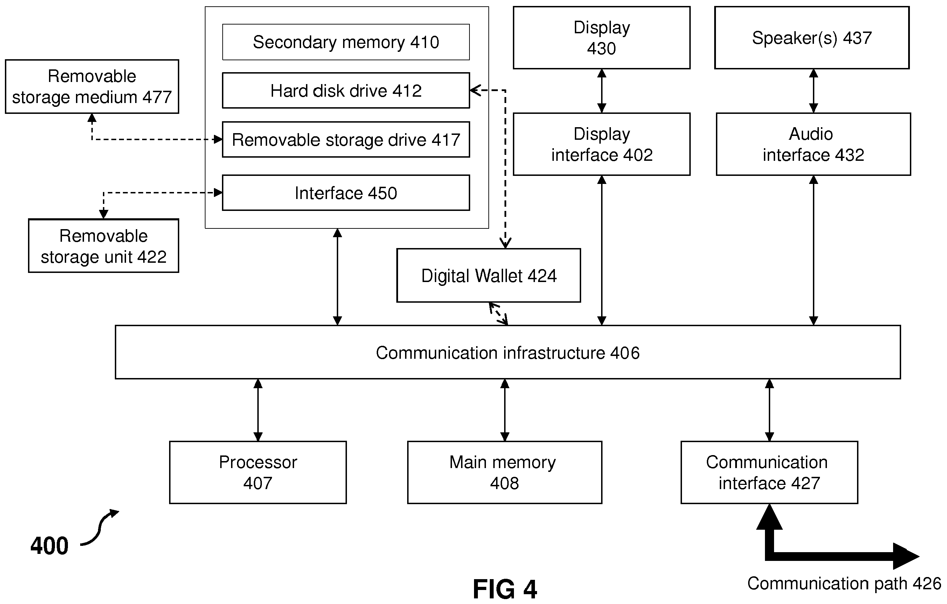

FIG. 7 shows a network 700 for autonomous purchase of a purchase order. The network includes 700 an autonomous system 708. The system 708 is capable of performing the computer processes of FIGs. 1 and 6. The autonomous system 708 comprises, with reference to FIG. 4:
at least one processor 407; and
a memory comprising at least one non-transitory memory device 477, 410, 417, 422, 408 such as a hard disk or universal serial bus (USB) drive.

The memory stores the digital wallet for use in making a purchase transaction to fulfil the purchase order, the purchase order comprising a delivery location and one or more goods to be purchased by the purchase order. That digital wallet includes at least one payment vehicle for use in purchasing the purchase order. The memory also stores instructions that, when executed by the processor, cause the autonomous system to perform the computer process of FIG. 1 and/or FIG. 6.

In the embodiment of FIG. 7, the system 708 also includes an interface 450. The interface can be used to receive the purchase order. In that sense, the instructions stored in the memory, when executed by the processor, cause the autonomous system to receive the purchase order via the interface.

The interface 450 may be a touch screen, memory port (e.g. USB port), local area network or Internet enabled interface so as to receive purchase orders, the set of conditions for purchase and the set of purchase characteristics by which the autonomous system 400, 600 can subsequently make purchase decisions. Where approval of a purchase order is required (e.g. approval for payment), the interface may also be configured to receive that approval.

As described with reference to FIG. 6, the system 708 may include a stationary autonomous device 702. In some cases, the system 708 does not comprise any device other than the stationary autonomous device 702. Where the autonomous device 702 is stationary, it cannot move to a pickup location. It therefore connects to a network (as indicated by solid (hardwired) and dashed (wireless) connections 710, 712) in order to connect to the merchant system (i.e. merchant terminal and payment system 714). An example of such a stationary autonomous device is a smart refrigerator.

As discussed with reference to method 100, the system 708 can also include a delivery vehicle 704. In such cases, the delivery vehicle 704 must understand where to locate the goods and to where to deliver those goods. Thus, where a delivery vehicle 704 is used the purchase order comprises:
one or more goods for purchase;
a pickup location of a merchant 710 from which the one or more goods can be acquired; and
a delivery location to which the one or more goods are to be delivered, the instructions, when executed by the processor, causing the autonomous device 702 to instruct the delivery vehicle 704 to move to the pickup location. Each of these is discussed further with reference to FIG. 1 to 5.

When using a delivery vehicle 704, there are two devices that can affect payment - the autonomous device 702 and the delivery vehicle 704. Where the autonomous device 702 is to affect payment, the delivery vehicle 704 can move to the pickup location and inform the autonomous device 702, over wireless network connection 706 (e.g. a data telecommunications network connection) that payment for the purchase order can now be made. The autonomous device 702 can connect with the merchant terminal 716 to place the purchase order, or the delivery vehicle 704 can do so, and the autonomous device 702 then connects with the payment system 714 to affect payment. Payment is then made using the digital wallet stored by the autonomous device 702, via digital wallet provider 718 in cloud server 720 as discussed in more detail with reference to FIG. 2.

The delivery vehicle 704 may instead make payment. This embodiment is discussed in greater detail with reference to FIG. 2.

The autonomous device 702 or the delivery vehicle 704, or both, may store a companion digital wallet. The autonomous device 702 may instead store a main digital wallet of which the companion digital wallet in the delivery vehicle is a companion. A companion digital wallet is configurable via the corresponding main digital wallet, which may be stored on a further electronic device such as a smartphone. The companion digital wallet itself cannot be configured except via the main digital wallet. There is therefore little risk that if the delivery vehicle or autonomous device is acquired or stolen by a third party, that the companion digital wallet can be used to make purchases the owner of the main digital wallet did not intend to make.

Since some embodiments permit either the autonomous device 702 or the delivery vehicle 704 to affect payment for the purchase order, the instructions stored in memory of the system 708 can enable autonomous selection of whether the purchase order should be purchased by connecting the autonomous device 702 to the payment system 714 or the delivery vehicle 702 to the payment system 714.

FIG. 1 shows a computer process 100 for purchasing one or more goods using an autonomous device. In this embodiment, the autonomous device is an autonomous robot. Moreover, the autonomous robot is also a delivery vehicle (i.e. is an autonomous delivery robot) in that it can travel to a merchant and acquire one or more goods from the merchant, then deliver the one or more goods to a delivery destination. In some embodiments, the autonomous device and delivery vehicle will be separate units - it will be appreciated following features and embodiments that do not require the autonomous device to be the delivery vehicle will thus apply to autonomous devices that are stationary (i.e. static or without autonomous motion) as well as those that are autonomous robots. In these cases, the delivery vehicle need not be autonomous.

The computer process 100 enables a robot (i.e. the autonomous delivery robot) to make purchases on behalf of a non-present purchaser. Some embodiments involve the pre-approval or authorisation of usage of funds to affect purchase. Other embodiments involve approval or authorisation to use funds to affect purchase, around the time the one or more goods are acquired by the robot.

The computer process 100 broadly comprises:
Step 102: receiving a purchase order;
Step 104: moving delivery vehicle to the pickup location;
Step 106: receiving one or more goods from a merchant;
Step 108: affecting payment; and
Step 110: delivering the one or more goods.

Broadly speaking, the computer process 100 results in a purchase order being sent to an autonomous delivery robot. The robot then travels to the merchant (i.e. source of the one or more goods), or multiple merchants if necessary to complete the purchase order, picks up the one or more goods, pays for the one or more goods and delivers them to the delivery location.

At step 102, a purchase order is received by the autonomous delivery robot. The purchase order comprises the necessary detail to ensure the one or more goods are transported to the consumer who raised the purchase order. The purchase order comprises the one or more goods for purchase - in other words, the purchase order contains information identifying the one or more goods so that the merchant understands how to fulfil the purchase order. The purchase order also comprises the pickup and delivery locations, the pickup location being the location of the merchant from which the one or more goods can be acquired by the robot, and the delivery location being the location where the one or more goods are to be delivered. Notably, the delivery location need not be the location of the consumer who raised the purchase order.

In one example, a purchase order comprises:
a pizza and soft drink - the one or more goods for purchase;
152A Tonys Road, Singapore - the pickup location of the merchant (pizza maker) from which the one or more goods can be acquired; and
27B Stationary Road South, Singapore - the delivery location to which the one or more goods are to be delivered.

From this information, the robot can navigate to 152A Tonys Road (the pickup location), acquire the pizza (goods from the merchant) and deliver the pizza to 27B Stationary Road South (the delivery location).

The robot may receive the purchase order in a variety of ways. In general, at least the first order will not be generated by the robot. Instead, a consumer may input the purchase order directly into an interface associated with the robot, such as a keypad or touchscreen provided on the robot or a control terminal used for remotely controlling the robot - step 112. Alternatively, a further electronic device such as a smartphone, laptop, other portable electronic device, smart refrigerator or television may transmit the purchase order wirelessly, or through hardwired connection, to the robot - step 114. This enables the automation of creation of purchase orders. For example, when a smart refrigerator determines (or is advised by a consumer) that a particular food or drink product is running low or is finished, it can generate a shopping list and send that shopping list to the robot. The robot may then commence execution of steps 104 to 110 upon receipt of the shopping list. The robot may alternatively wait until a certain period has elapsed - such as one week - so that it is not continually travelling between the merchant for the relevant products and the refrigerator.

The refrigerator, or other electronic device, may also supply the robot with pickup and delivery location information. The robot may instead assume the delivery location is the same for all food and drink product orders. Similarly, the robot may assume that all food and drink orders should be satisfied by the same merchant or merchants. Thus upon receipt of the pickup and delivery location for particular categories of products (e.g. food and drink products, electronic consumer products, and so forth) the robot may automatically populate future orders for similar products using the same pickup and delivery information.

Different products will be purchased with differing frequency. For example, milk may be purchased every four or five days, whereas a new smartphone may be purchased only every few years. Thus purchase orders for some products, such as milk and bread, may be automatically and periodically generated. Receiving a purchase order in these instances may comprise receiving a periodically generated purchase order transmitted from a remote electronic device - such as a laptop, smartphone or refrigerator. Alternatively, the robot may comprise a memory and processor, the memory being for storing a purchase order history - the purchase order history is a list of purchase orders and products in those purchase orders. The memory may also store instructions that, when executed by the processor, cause the processor to analyse the purchase order history to identify trends, or outliers, in the purchase order history. Using this analysis, the processor may identify products purchased on a periodic basis. The processor may use the outcomes of this analysis to periodically, automatically generate purchase orders for products purchased on a periodic basis. For example, the processor may determine that milk is purchased every three days and thus generate a purchase order, comprising milk, every three days. Other products, if desired, can be added to that purchase order. Furthermore, the period need not be entirely consistent. For example, milk may be purchased every three or four days. The robot may thus generate the periodic purchase order every three and a half days (being the average of three and four days) or may generate purchase orders for milk on an alternating basis every third day and fourth day.

In addition to receiving the purchase order and performing the delivery task, the robot performs or affects the transaction with the merchant. To facilitate this operation, the robot comprises a digital wallet that can interact with a payment system - for example a point-of-sale (POS) terminal or near-field communications (NFC) reader - to transmit payment vehicle credentials of a payment vehicle stored in the digital wallet. The payment system is in communication with a payment network - such as the standard four party network comprising a merchant, acquirer, payment scheme and issuer - so that the payment vehicle credentials can be used to debit funds from an account associated with the payment vehicle in order to affect purchase of the one or more goods.

Moreover, in some embodiments a static device, such as a smart refrigerator, will be the autonomous device. In these cases, the autonomous device creates the purchase orders and manages payment for the one or more goods, and uses the delivery vehicle simply to acquire and deliver the goods. In these cases, the refrigerator or other autonomous device will communicatively connect with the merchant terminal via a network (e.g. the Internet) over which payment can be made, for example via a payment gateway.

In saying the payment vehicle credentials are stored in the digital wallet or, similarly, that the digital wallet comprises those payment vehicle credentials, it is intended that sufficient details about the payment vehicle are stored in the digital wallet so that, through interaction of the digital wallet with a payment system during a transaction, funds associated with the respective payment vehicle can be debited to affect the transaction. In addition, the robot may not be authorised to determine whether or not a particular payment vehicle can be used to affect a transaction. Thus there should be preapproval for use of at least one payment vehicle stored in the digital wallet, for affecting the transaction.

In the present embodiments, the digital wallet is a companion digital wallet associated with a main digital wallet. The main digital wallet is installed on a further electronic device such as a smartphone. The further electronic device is necessarily a different device to the autonomous delivery robot. The difference between digital wallets is illustrated by the functions capable of being performed using each. In particular, there are more functions available when interacting with the main digital wallet than when interacting with the companion digital wallet. The main digital wallet can be used to set a threshold transaction value. If a purchase order value - the amount of a particular currency required to affect payment for the purchase order - is below the threshold transaction value, then the purchase is automatically approved without needing approval from the consumer whose payment vehicle is to be used in the transaction. In effect, the consumer has pre-approved transactions relating to purchase orders having a value below the threshold. Conversely, if the purchase order value is at or above the threshold then payment needs to be approved or authorised by the consumer.

The main digital wallet can also be used to specify that particular payment vehicles should be used for particular purchase orders, or at particular merchants. This enables the consumer to separate business-related purchases using one payment vehicle, from personal purchases using a different payment vehicle.

The main digital wallet can further be used to update personal details, such as shipping address or delivery location - this shipping address can be used to automatically satisfy the delivery location requirement of a purchase order.

The companion wallet in the present embodiments is simply used to affect payment. The companion digital wallet can transmit payment vehicle credentials to a payment system upon connection (e.g. through NFC) with the payment system. The companion digital wallet may otherwise perform no further functions.

Where transactions are above the threshold value, or no threshold has been set, the companion digital wallet may also be configured to send to the main digital wallet a request for authorisation to make payment. This may be performed over a telecommunications network, via an Internet connection or any other appropriate transmission network. Similarly, a payment scheme, the provider of the main digital wallet or another party, on the payment network that comprises the merchant terminal, may send a request for authorisation to the main digital wallet.

The request may be sent as a push notification. The main digital wallet may comprise a function to authorise the payment or, alternatively, a reply to the push notification may comprise that authorisation. Once authorisation has been provided, payment is affected.

Step 104 involves moving a delivery vehicle to the pickup location to acquire the one or more goods from the merchant. The autonomous robot may also be the delivery vehicle. In such cases, the operation of moving the delivery vehicle to the pickup location is dependent on the nature of the robot, and such motion is one of the operations for which each such robot has been designed. For example, an aerial drone will fly to the pickup location. A mobile (i.e. land-based) drone will drive over landscape to the pickup location. Such functions are particular to the robot.

Where the autonomous robot is not the delivery vehicle, the autonomous robot or the merchant may schedule a delivery vehicle to acquire the one or more goods from the merchant. The delivery vehicle may be a drone or other sort of courier.

Step 106 involves the delivery vehicle receiving the one or more goods from the merchant. The delivery vehicle may comprise a receptacle in which the one or more goods are deposited. For chilled or warmed goods, the receptacle may be temperature controlled. The delivery vehicle may alternatively comprise a surface on which the one or more goods are placed by the merchant or, for flying delivery vehicles, a suspended payload system. The configuration of delivery vehicle to carry goods, such as the provision of a receptacle, is understood by the skilled person.

Step 108 involves affecting payment for the one or more goods using the payment vehicle. Affecting payment comprises communicatively coupling the digital wallet with a payment system. Where the autonomous robot is the delivery vehicle, it will be present at the time the one or more goods are acquired and can thus make payment directly with the merchant. In such cases, the digital wallet and payment system pair or connect using, for example, NFC technology.

In other embodiments, the autonomous device (e.g. a smart refrigerator) may communicate with the payment system over a telecommunications network, the Internet or another network.

Payment vehicle credentials of the payment vehicle to be used for affecting payment for the purchase order are then sent to the payment system in accordance with standard communication protocols. Where a threshold transaction value has been set, this may be the default for contactless transaction - for example, SG$100. The payment system may instead be configured to send to the robot the purchase order value. The robot is configured to receive the purchase order value and compare that value to the threshold transaction value. If the purchase order value is lower than the purchase order value then the digital wallet, and thus the robot, automatically provides authorisation to the payment system. Where the purchase order value is known in advance, then authorisation to affect payment may be supplied to the robot along with the purchase order. Payment for the purchase order is thus authorised provided the purchase order amount is at most the value of the transaction as authorised. It will be appreciated that in some instances the exact purchase order value cannot be known in advance. For example, where the purchase order requests 1kg of apples, it is unlikely that a whole number of apples will weigh exactly 1 kg. In this case a tolerance may be provided such that payment is authorised provided the purchase order value is less than, for example, 5% more than the value as authorised. In any event, once authorisation is given, the payment system commences processing of the transaction in the usual manner.

In a further embodiment, the payment system commences processing of the transaction and the digital wallet provider requests authorisation from the consumer by sending a push notification to the mobile device on which the main digital wallet is installed.

Step 110 involves delivering the one or more goods to the delivery location. This, again, is a process for which autonomous robots are increasingly being designed and will thus be understood by the skilled person. Similarly, where the autonomous robot is not the delivery vehicle, movement of the delivery vehicle to the delivery location will be understood by the skilled person.

Once the one or more goods have been delivered, the consumer may confirm proper delivery, or may advise that delivery was incomplete - for example, there may have been items missing from the delivery, or some of those items may not have been suitable (e.g. expired food). The process of confirming proper delivery of goods to a delivery location is discussed in Singapore patent application No. 10201606948X, filed 19 AUGUST 2016 and entitled "ITEM DELIVERY MANAGEMENT SYSTEMS AND METHODS, the entire contents of which is incorporated herein by reference.

FIG. 2 illustrates a network 200 for purchasing one or more goods using an autonomous delivery robot. In other words, the network 200 can affect the computer process 100 of FIG. 1. The network 200 comprises:
202 - an autonomous delivery robot;
204 - an electronic device;
206 - a delivery location;
208 - a payment system;
210 - a pickup location;
212 - a payment network; and
214 - a digital wallet provider.

The autonomous delivery robot 202 may be located anywhere. The autonomous delivery robot 202 will usually be located at the delivery location 206 upon commencement of performance of the computer process 100. However, the computer process 100 can still be performed when the autonomous delivery robot is not located at the delivery location at the outset.

In the present embodiment, the electronic device 204 is located at the delivery location 206. In other embodiments, the electronic device 204 is located elsewhere. For example, on St. Valentine's Day a consumer may send the autonomous delivery robot 202 to acquire some flowers and drop them off at another person's address.

A purchase order is generated on the electronic device 204 and transmitted to the robot 202. In the present case, the electronic device 204 is a smartphone and the purchase order is generated by identifying the one or more goods on the merchant's app, website, Micros® terminal or other checkout terminal (merchant terminal). The payment gateway accessible through the merchant terminal (payment system) makes available various payment methods, one of which is payment using a digital wallet upon pickup of the one or more goods by the autonomous delivery robot. Upon selection of the payment acceptance mark associated with the digital wallet, the smartphone 204, or main digital wallet installed thereon, delivers the purchase order to the autonomous delivery robot 202. This can be achieved by coupling the robot 202 with the electronic device 204 using NFC technology or, where the robot 202 and electronic device 204 are not within NFC range, by pairing the robot 202 and device 204 over the Internet or a Wifi connection 216.

The purchase order may instead be generated by creating a shopping list for collection at a particular pickup location 210, and sending the shopping list to the robot 202. Upon moving the robot 202 to the pickup location 210, the robot 202 will supply the merchant with the purchase order - for example, by displaying the purchase order on a display associated with the robot 202, or by sending the purchase order via NFC technology or similar, to a device (e.g. a payment system 208) located at the pickup location 210. The merchant then assembles the one or more goods so as to fulfil the purchase order.

Once the one or more goods have been assembled, the payment system 208 and the companion digital wallet installed on the robot 202 communicate to commence processing of the transaction in the usual manner over payment network 212.

Processing the transaction may involve communicating details of the transaction to the provider 214 of the digital wallet. The provider may, if necessary, seek authorisation to affect the transaction using the payment vehicle details sent from the companion digital wallet to the payment system 208. Alternatively, the digital wallet provider 214 may automatically permit payment to be affected where, for example, it is shown payment was authorised in advance, or where the purchase order value is below a standard or specified threshold value.

Once the one or more goods have been acquired by the robot 202, the robot 202 delivers the one or more goods to the delivery location 206. In some cases, the transaction will not be affected until delivery has been made. This ensures funds are not transferred to the merchant in the event the purchase order is incomplete (e.g. at least one of the one or more goods is missing from the order as delivered) or one of the goods is unsuitable, such as expired food or an incorrect brand of a particular product. Confirmation of completion of delivery is discussed in SG 10201606948X.

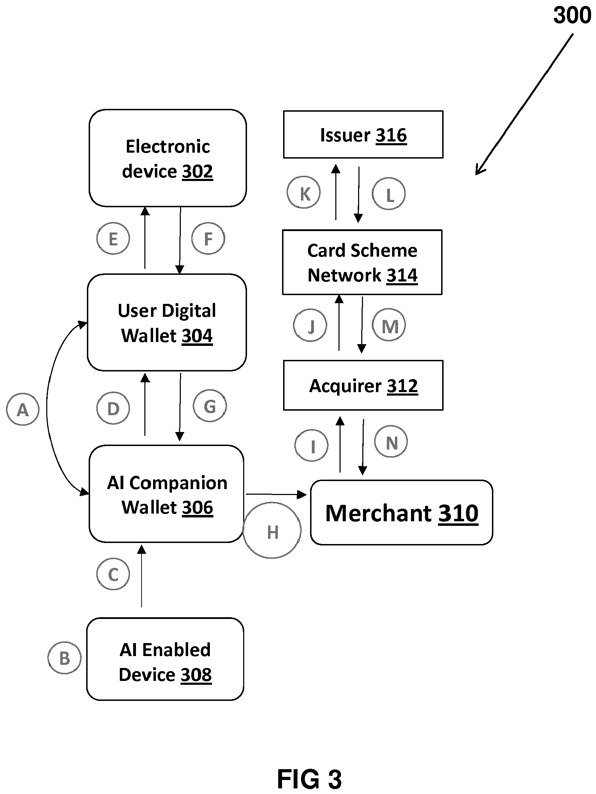

FIG. 3 illustrates a process flow 300 for setting up an autonomous device prior to execution of the computer process 100 of FIG. 1, and subsequent execution of that computer process 100. As a starting point, a consumer's device 302 hosts a digital wallet 302. A companion wallet 306 is installed on the autonomous device 308. At step A, the digital wallet 304 is paired with the companion wallet 306. That pairing is authenticated such that the companion wallet 306 is controllable exclusively from the digital wallet 304 with which it is paired.

At step B the autonomous device 308 detects that a new purchase order should be made. While this may involve receiving a new purchase order as described above, in the present embodiment the device 308 determines a purchase order should be raised based on past consumption habits and current inventory level. Such a process may be performed by a smart refrigerator when considering food and beverage consumption rates and current inventory levels, or a driverless car when determining fuel usage rates and current tank level.

At steps C to E, the autonomous device 308 recommends items to be purchased and requests for authorisation to proceed with the purchase. The request is sent from the autonomous device 308, via the companion wallet 306 to the digital wallet 304. The digital wallet 304 pushes a notification onto the display of device 302, for the user of the device 302 to authorise payment.

At step F, the device 302 receives authorisation to make the purchase. This authorisation may be given for all purchase orders for similar products, and that ongoing or perpetual authorisation is stored as a preference in the main digital wallet 304. Alternatively, the authorisation may be a one-off authorisation for the purchase order in question.

At step G the main digital wallet 304 generates authentication credentials that are sent to the companion digital wallet 306. The companion digital wallet 306 can use the authentication credentials to authorise payment to a merchant 310.

At step H the autonomous device 308 process to an e-commerce website, e-commerce app or physical retail location (e.g. driverless car to petrol station, drone to store etc) to make the purchase using the companion digital wallet 306. The purchase may be made in various forms for which the companion digital wallet 306 is enabled, such as wallet-to-app payment for an e-commerce app, wallet-to-e-commerce site payment for an e-commerce website, NFC payment in-store.

At steps I to N the standard communication protocol is applied between the acquiring bank 312, card scheme network 314 and issuing bank 316 to process and complete the transaction.

Once completed, the autonomous device 308 proceeds to the delivery location or (e.g. driverless vehicle drives back home from the petrol station), in the case of a smart refrigerator being the autonomous device, a separate drone or courier is sent to acquire the one or more goods contained in the purchase order.

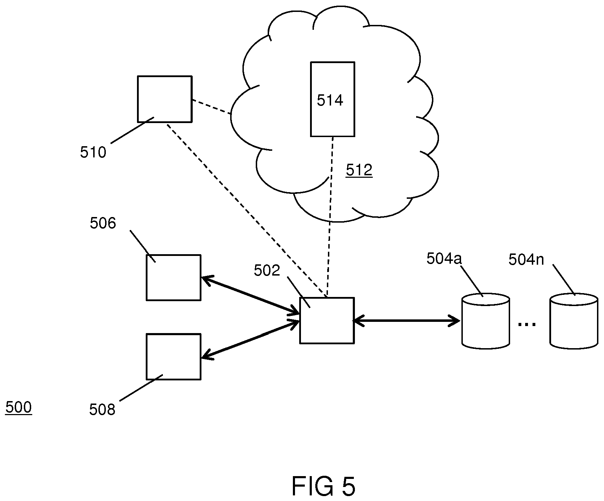

FIG. 4 depicts an exemplary computing device 400, hereinafter interchangeably referred to as a computer system 400, where one or more such computing devices 400 may be used in execution of the computer processes of FIGs. 1 and 3. The exemplary computing device 400, or multiple such devices, can be used to implement the system 200 shown in FIGs. 2 and 5. The following description of the computing device 400 is provided by way of example only and is not intended to be limiting.

As shown in FIG. 4, the example computing device 400 includes a processor 407 for executing software routines. Although a single processor is shown for the sake of clarity, the computing device 400 may also include a multi-processor system. The processor 407 is connected to a communication infrastructure 406 for communication with other components of the computing device 400. The communication infrastructure 406 may include, for example, a communications bus, cross-bar, or network.

The computing device 400 further includes a main memory 408, such as a random access memory (RAM), and a secondary memory 410. The secondary memory 410 may include, for example, a storage drive 412, which may be a hard disk drive, a solid state drive or a hybrid drive and/or a removable storage drive 417, which may include a magnetic tape drive, an optical disk drive, a solid state storage drive (such as a USB flash drive, a flash memory device, a solid state drive or a memory card), or the like. The removable storage drive 417 reads from and/or writes to a removable storage medium 477 in a well-known manner. The removable storage medium 477 may include magnetic tape, optical disk, non-volatile memory storage medium, or the like, which is read by and written to by removable storage drive 417. As will be appreciated by persons skilled in the relevant art(s), the removable storage medium 477 includes a computer readable storage medium having stored therein computer executable program code instructions and/or data.

In an alternative implementation, the secondary memory 410 may additionally or alternatively include other similar means for allowing computer programs or other instructions to be loaded into the computing device 400. Such means can include, for example, a removable storage unit 422 and an interface 450. Examples of a removable storage unit 422 and interface 450 include a program cartridge and cartridge interface (such as that found in video game console devices), a removable memory chip (such as an EPROM or PROM) and associated socket, a removable solid state storage drive (such as a USB flash drive, a flash memory device, a solid state drive or a memory card), and other removable storage units 422 and interfaces 450 which allow software and data to be transferred from the removable storage unit 422 to the computer system 400.

The computing device 400 also includes at least one communication interface 427. The communication interface 427 allows software and data to be transferred between computing device 400 and external devices via a communication path 426. In various embodiments of the inventions, the communication interface 427 permits data to be transferred between the computing device 400 and a data communication network, such as a public data or private data communication network. The communication interface 427 may be used to exchange data between different computing devices 400 which such computing devices 400 form part an interconnected computer network. Examples of a communication interface 427 can include a modem, a network interface (such as an Ethernet card), a communication port (such as a serial, parallel, printer, GPIB, IEEE 1494, RJ45, USB), an antenna with associated circuitry and the like. The communication interface 427 may be wired or may be wireless. Software and data transferred via the communication interface 427 are in the form of signals which can be electronic, electromagnetic, optical or other signals capable of being received by communication interface 427. These signals are provided to the communication interface via the communication path 426.

The computer system 400 further includes a digital wallet 424 installed in memory, such as memory 408 or 410. For the electronic device 302 of FIG 3, the digital wallet 424 is the main digital wallet 304. For the autonomous device 308 of FIG. 3, the digital wallet 424 is the companion digital wallet 306. In either case, the digital wallet 424 is connected to communications interface 427. This enables the digital wallet 424 to communicate with a companion or main digital wallet. Via the communications interface 427 the digital wallet 424 can also pair with a payment system (through NFC technology in an in-store context, or through a payment gateway in an e-commerce context) in order to affect payment for the purchase order. The communications interface 427 also enables the digital wallet 424 to push notifications for display on the display 430.

As shown in FIG. 4, the computing device 400 further includes a display interface 402 which performs operations for rendering images to the associated display 430 and an audio interface 432 for performing operations for playing audio content via associated speaker(s) 437.

As used herein, the term "computer program product" may refer, in part, to removable storage medium 477, removable storage unit 422, a hard disk installed in storage drive 412, or a carrier wave carrying software over communication path 426 (wireless link or cable) to communication interface 427. Computer readable storage media refers to any non-transitory, non-volatile tangible storage medium that provides recorded instructions and/or data to the computing device 400 for execution and/or processing. Examples of such storage media include magnetic tape, CD-ROM, DVD, Blu-rayTM Disc, a hard disk drive, a ROM or integrated circuit, a solid state storage drive (such as a USB flash drive, a flash memory device, a solid state drive or a memory card), a hybrid drive, a magneto-optical disk, or a computer readable card such as a PCMCIA card and the like, whether or not such devices are internal or external of the computing device 400. Examples of transitory or non-tangible computer readable transmission media that may also participate in the provision of software, application programs, instructions and/or data to the computing device 400 include radio or infra-red transmission channels as well as a network connection to another computer or networked device, and the Internet or Intranets including e-mail transmissions and information recorded on Websites and the like.

The computer programs (also called computer program code) are stored in main memory 408 and/or secondary memory 410. Computer programs can also be received via the communication interface 427. Such computer programs, when executed, enable the computing device 400 to perform one or more features of embodiments discussed herein. In various embodiments, the computer programs, when executed, enable the processor 407 to perform features of the above-described embodiments. Accordingly, such computer programs represent controllers of the computer system 400.

Software may be stored in a computer program product and loaded into the computing device 400 using the removable storage drive 417, the storage drive 412, or the interface 450. The computer program product may be a non-transitory computer readable medium. Alternatively, the computer program product may be downloaded to the computer system 400 over the communications path 426. The software, when executed by the processor 407, causes the computing device 400 to perform the necessary operations to execute the computer processes 100, 300 as shown in FIGs. 1 and 3 respectively.

It is to be understood that the embodiment of FIG. 4 is presented merely by way of example to explain the operation and structure of the network 200. Therefore, in some embodiments one or more features of the computing device 400 may be omitted. Also, in some embodiments, one or more features of the computing device 400 may be combined together. Additionally, in some embodiments, one or more features of the computing device 400 may be split into one or more component parts.

It will be appreciated that the elements illustrated in FIG. 4 function to provide means for performing the various functions and operations of the servers as described in the above embodiments.

FIG. 5 shows a schematic of a network-based system 500 for purchasing one or more goods using an autonomous device, according to an embodiment of the invention. The system 500 comprises a computer or autonomous device 502, one or more databases 504a...504n, a user input module or electronic device 506, on which the main digital wallet is installed, an output module or delivery vehicle 508 that collects the one or more goods from the merchant, a payment system 510, a payment network 512 and digital wallet provider 514 within the payment network. Each of the one or more databases 504a...504n is communicatively coupled with the computer 502. In some embodiments, the autonomous device 502 and delivery vehicle 508 may be the same unit. In other embodiments, the autonomous device 502 and delivery vehicle 508 are separate units.

Each of the autonomous device 502, electronic device 506, delivery vehicle 508 and payment system 510 may comprise, with reference to FIG. 4: at least one processor 407; and at least one memory 408, 410 including computer program code; the at least one memory 408, 410 and the computer program code configured to implement the functions, as the case may be, of one or more of the autonomous device (with or without Internet connectivity), payment system, delivery vehicle and electronic device (e.g. consumer's smartphone).

In the case of the autonomous device 502, the computer program code, when executed by the processor 407, may cause the computing device to: (A1) receive a purchase order comprising: one or more goods for purchase; a pickup location of a merchant from which the one or more goods can be acquired by a delivery vehicle; and a delivery location to which the one or more goods are to be delivered, and store in memory a digital wallet, the digital wallet containing a payment vehicle approved for use to purchase the one or more goods, (B1) affect payment for the one or more goods using the payment vehicle, by communicatively coupling the digital wallet with a payment system and sending to the payment system payment vehicle credentials of the payment vehicle.

The autonomous device 502 may perform step (A1) by at least one of: receiving the purchase order via manual input into an interface associated with the autonomous device; receiving the purchase order from a portable electronic device; receive a purchase order that is periodically generated by a remote device; and periodically generating the purchase order at the autonomous device.

The autonomous device 502 may perform step (B1) by receiving authorisation to affect payment using the payment vehicle. That authorisation may be received with the purchase order. That authorisation may alternatively be requested by the autonomous device after the delivery vehicle has moved to the pickup location. The autonomous device may request authorisation be sending a push notification to an electronic device of a user and receiving, from the electronic device, authorisation to affect payment for the one or more goods using the payment vehicle

The autonomous device 502 may determine whether step (B1) should be affected by determining whether an amount for purchase of the one or more goods is below a threshold transaction value and: if so, automatically generating authorisation for affecting payment using the payment vehicle; or if not, requesting authorisation to affect payment using the payment vehicle.

The computer program steps, when executed by the at least one processor 407, may further configure the autonomous device 502 to (C1) receive payment confirmation upon successful completion of payment.

Where the computer 500 is the delivery vehicle 508, the computer program code, when executed by the at least one processor 407, may configure the computer 500 to: (A2) move the delivery vehicle to the pickup location; (B2) receive the one or more goods from the merchant; and (C2) deliver the one or more goods to the delivery location.

The above functions specific to the delivery vehicle 508 may also be performed by the autonomous device 502 in embodiments where the autonomous device 502 is also the delivery vehicle 508.

Where the computer 500 is the electronic device 506 - e.g. a smart phone or other device that is different from the autonomous device 502, but can generate purchase orders and transmit them to the autonomous device 502 - the computer program code, when executed by the at least one processor 407, may cause the computer 500 to: (A3) periodically generate the purchase order at a remote electronic device; and (B3) send the purchase order to the autonomous device.

The computer program code, when executed by the at least one processor, may further configure the electronic device to receive payment confirmation upon successful completion of payment for the purchase order.

The operation of the payment system 510 which may be, for example, a point-of-sale (POS) terminal, will be understood by the skilled person.

The computer 500, such as when it comprises the payment system 510 or autonomous device 502, may be in communication with a payment network (such as BANKNET of MasterCard International Incorporated) to effect payment for the order upon verification of delivery by the recipient.

The various types of data, e.g. past purchase orders, consumer preferences (e.g. brand of a particular product, regularity with which a product should be ordered, delivery times, delivery dates), payment vehicle details (e.g. one payment vehicle for particular, business-related products and a different payment vehicle for personal purchases), delivery and pickup location details, can be stored on a single database (e.g. 504a), or stored in multiple databases (e.g. consumer preference details can be stored on database 504a, payment vehicle credentials can be stored on database 504n, etc.). The databases 504a...504n may be realized using cloud computing storage modules and/or dedicated servers communicatively coupled with the computer 502.

While exemplary embodiments have been presented in the foregoing detailed description of the invention, it should be appreciated that a vast number of variations exist.

It should further be appreciated that the exemplary embodiments are only examples, and are not intended to limit the scope, applicability, operation, or configuration of the invention in any way. Rather, the foregoing detailed description will provide those skilled in the art with a convenient road map for implementing an exemplary embodiment of the invention, it being understood that various changes may be made in the function and arrangement of elements and method of operation described in an exemplary embodiment without departing from the scope of the invention as set forth in the appended claims.

## Claims

1. An autonomous system for autonomous purchase of a purchase order, the autonomous system comprising:
at least one processor; and
a memory comprising at least one non-transitory memory device, the memory storing a digital wallet comprising at least one payment vehicle for use in purchasing the purchase order,
wherein the memory comprises instructions that, when executed by the processor, cause the autonomous system to:
determine if the purchase order satisfies a set of purchase characteristics;
decide to execute purchase of the purchase order upon fulfilment of a set of conditions for purchase;
connect to a merchant terminal of at least one merchant through whom the purchase order can be fulfilled;
connect the digital wallet to a payment system through which payment for the purchase order can be made; and
purchasing the purchase order via the payment system using one or more payment vehicles of the at least one payment vehicle.

2. A system according to claim 1, wherein the set of purchase characteristics comprises at least one of:
a maximum purchase order value of the purchase order being equal to or less than a predetermined value;
the purchase order comprising one of a pre-approved type of purchase order;
the purchase order comprising one or more goods each good being from at least one permitted goods category; and
the purchase order comprising one or more goods supplied by one or more merchants each merchant being at least one of:
a permitted merchant;
from a permitted merchant category; and/or
from a permitted industry vertical.

3. A system according to claim 1, wherein the set of conditions for purchase comprises at least one of:
a threshold inventory level being reached;
a predetermined period of time having elapsed since purchase of a previous purchase order;
a sum of a purchase order value of the purchase order and a purchase order value of any other purchase orders purchased during a predetermined time window being equal to or less than a maximum purchase order value for the predetermined time window; and
wherein the purchase order comprises one or more goods, a predetermined period of time being specified with reference to at least one good of the one or more goods and the predetermined period of time specified with reference to the at least one good having elapsed since previous purchase of a comparable good to the at least one good.

4. The system according to any preceding claim, further comprising an interface, the instructions, when executed by the processor, causing the autonomous system to receive the purchase order via the interface.

5. The system according to any preceding claim, wherein the autonomous system comprises a stationary autonomous device.

6. The system according to claim 5, wherein the instructions, when executed by the processor, cause the autonomous device to connect to the merchant terminal via a network.

7. The system according to claim 5 or 6, wherein the autonomous device is a smart refrigerator.

8. The system according to any one of claims 5 to 7, further comprising a delivery vehicle, wherein the purchase order comprises:
one or more goods for purchase;
a pickup location of a merchant from which the one or more goods can be acquired; and
a delivery location to which the one or more goods are to be delivered, the instructions, when executed by the processor, causing the autonomous device to instruct the delivery vehicle to move to the pickup location.

9. The system of any one of claims 5 to 8, wherein the digital wallet is stored by the delivery vehicle, and instructions, when executed by one or more of the at least one processor, cause the delivery vehicle to connect to the merchant terminal and the payment system at the pickup location.

10. The system of any one of claims 5 to 8, wherein the digital wallet is stored by the autonomous device, and the delivery vehicle comprises a companion digital wallet being a companion of the digital wallet stored by the autonomous device, wherein the instructions, when executed by one or more of the at least one processor, select whether the purchase order should be purchased by connecting the autonomous device to the payment system or the delivery vehicle to the payment system.

11. The system of any one of claims 5 to 8, wherein the digital wallet is stored by the autonomous device and is a companion digital wallet of a main digital wallet stored on a further electronic device that is different to the autonomous device and delivery vehicle, the delivery vehicle comprises a companion digital wallet of the main digital wallet, and wherein the instructions, when executed by one or more of the at least one processor, select whether the purchase order should be purchased by connecting the autonomous device to the payment system or the delivery vehicle to the payment system.

12. A computer process for purchasing one or more goods using an autonomous device, the computer process comprising:
receiving, at the autonomous device, a purchase order comprising:
one or more goods for purchase;
a pickup location of a merchant from which the one or more goods can be acquired by a delivery vehicle; and
a delivery location to which the one or more goods are to be delivered,
wherein the autonomous device comprises a digital wallet, the digital wallet containing a payment vehicle approved for use to purchase the one or more goods;
moving the delivery vehicle to the pickup location;
receiving, by the delivery vehicle, the one or more goods from the merchant;
affecting payment for the one or more goods using the payment vehicle, wherein affecting payment comprises communicatively coupling the digital wallet with a payment system and sending to the payment system payment vehicle credentials of the payment vehicle; and
delivering, using the delivery vehicle, the one or more goods to the delivery location.

13. The computer process according to claim 12, wherein receiving the purchase order comprises receiving the purchase order via manual input into an interface associated with the autonomous device or receiving the purchase order comprises receiving the purchase order from a portable electronic device.

14. The computer process according to claim 12 or 13, wherein receiving the purchase order comprises:
periodically generating the purchase order at a remote electronic device; and
sending the purchase order to the autonomous device,
and preferably receiving the purchase order comprises periodically generating the purchase order at the autonomous device.

15. A computer process for autonomous purchase of a purchase order, the computer process comprising:
providing an autonomous system comprising memory storing a digital wallet comprising at least one payment vehicle for use in purchasing the purchase order,
autonomously determining, at the autonomous system, if the purchase order satisfies a set of purchase characteristics;
if the purchase order satisfies the set of purchase characteristics, autonomously deciding, at the autonomous system, to execute purchase of the purchase order upon fulfilment of at least one condition for purchase;
connecting the autonomous system to a merchant terminal of at least one merchant through whom the purchase order can be fulfilled;
connecting the digital wallet to a payment system through which payment for the purchase order can be made; and
purchasing the purchase order via the payment system using one or more payment vehicles of the at least one payment vehicle.
